# EUROPEAN PATENT APPLICATION

(11) **EP 2 722 090 A1**
(43) Date of publication of application: **23.04.2014**
(21) Application number: 13189554.2
(22) Date of filing: 21.10.2013
(51) Int. Cl.: B01D 35/153, B01D 27/10, C02F 9/00

(54) **Water filter cartridge with valves**

(30) Priority: 22.10.2012 US 201213657702
(71) Applicant: Baird, Michael T., Temecula, CA 92590 (US)
(72) Inventor: Baird, Michael T., Temecula, CA 92590 (US)
(74) Representative: Pallini Gervasi, Diego

(57) **Abstract**

A water filter cartridge having a housing with an inlet nozzle with a concentric, smaller outlet nozzle extending through the inlet nozzle with a space therebetween defining an inlet to a flow path passing through a filter and through the outlet nozzle. A diaphragm valve mounted to the outlet nozzle blocks upstream flow out of the inlet when the cartridge is not in use. An umbrella valve mounted on the end of the filter blocks downstream flow out of the outlet nozzle when the cartridge is not in use, thus reducing leakage when the cartridge is removed from the appliance.

## Description

### BACKGROUND

This application relates to water filter cartridges and in particular to a method and apparatus for preventing water from leaking from a used filter cartridge after removal of the cartridge from a refrigerator or other device.

Water dispensers are found on many household and commercial appliances ranging from household refrigerators to soft drink fountains found in fast food restaurants. The water provided to these water dispensers is usually filtered so that the water provided by the municipal water source is further purified to improve taste or to remove particulates or organisms in the water or simply to ensure the filtered water is of a predetermined quality. These filters are typically provided in removable, replaceable cartridges having a water inlet and outlet for the filtered water, with the inlet and outlet engaging a manifold in the refrigerator or appliance so that water does not leak out of the connection with the cartridge during use. The replaceable cartridges typically actuate a valve in the appliance so that removal of the cartridge shuts off water flow to prevent leakage from the appliance when the cartridge is removed. But the cartridge itself contains residual water and that residual water can leak out when the cartridge is removed for replacement. If the expended cartridge is tipped so that the water inlet and/or outlet is below the water level then the residual water in the cartridge may flow out of the cartridge and onto the floor or other surface, leaving an undesirable puddle or splash of water. There is thus a need for a way to prevent or reduce leakage of residual water from expended water filter cartridges.

Some filter cartridges have separate inlet and outlet nozzles and a prior approach to preventing leakage from such cartridges is described in Pat. No. 6,632,355, which places a coil spring actuated valve body on each nozzle, and to place a nozzle plate having a plurality of small openings (like a showerhead) in the flow channel where the openings are sized so that water tension holds water in the openings, creating a vacuum on one side of the nozzle plate to prevent water from leaking out. Unfortunately, jarring the cartridge can break or disrupt the surface tension and cause water to flow through the openings. Further, the coil spring actuated valves are difficult to place and the coil springs are subject to oxidization in the water environment of the filter cartridge. Further, some filter cartridges have the inlet and outlet nozzles coaxially located and the coaxial arrangement makes it impractical to use the coil spring valve bodies on such filter cartridges. There is thus a need for an improved filter cartridge that reduces or prevents water leakage from the filter cartridges as expended cartridges are removed for replacement.

### BRIEF SUMMARY

These and other advantages are provided by a water filter cartridge having a housing with a tubular inlet nozzle and a tubular outlet nozzle that extends through the inlet nozzle with a space between the nozzles to form an inlet to a flow path that passes through a cylindrical filter and then out through the outlet nozzle. A diaphragm valve is mounted to the outlet nozzle and across the inlet to block upstream flow out of the inlet nozzle when the cartridge is not in use. An umbrella valve is mounted on the downstream end of the filter to block downstream flow out of the outlet nozzle when the cartridge is not in use, thus reducing leakage when the cartridge is removed from the appliance.

There is thus provided a water filter cartridge having a housing with a water inlet and a water outlet which are connected inside the cartridge by an inlet flow path and an outlet flow path having a water filter therebetween. The cartridge may have at least one retaining lug located and configured to releasably fasten the cartridge to an appliance during use and further having a seal located and configured to form a water tight connection extending the flow path to the appliance during use. The filter cartridge is configured so that during use water from a pressurized source flows along the flow path, through the filter and out the outlet to provide filtered water. To prevent leakage when the cartridge is not in use, the cartridge has a first valve that is located to extend across and selectively block the inlet flow path. The first valve is resiliently biased toward a first closed position that blocks the inlet flow path and blocks flow past the first valve. The first valve has a second, open position in which the pressurized flow of water along the inlet flow path during use flexes the first valve in the downstream direction to allow the pressurized flow of water toward the filter during use. Leakage is also prevented by a second valve located to extend across and selectively block the outlet flow path. The second valve is resiliently biased toward a first, closed position blocking the outlet flow path. The second valve has a second, open position in which the flow of water along the outlet flow path during use flexes the second valve in the downstream direction to allow the flow of water past the filter and away from the second valve during use.

In further variations, the second valve is an umbrella valve and the first valve is an annular diaphragm valve having an inner periphery encircling an outlet nozzle. Advantageously, at least one of the first and second valves has a non-linear bending stiffness and is orientated so it requires greater pressurized fluid flow in the downstream direction for water to flow past the at least one valve and no pressure or fluid flow in the upstream direction for water to be blocked from flowing past the at least one seal.

Advantageously, the cartridge has a tubular inlet nozzle and a tubular outlet nozzle located inside the inlet nozzle with an annular space between the nozzles defining the water inlet. Advantageously, the first diaphragm valve has an inner portion connected to the outlet nozzle and an outer portion abutting the housing to form the first valve. Advantageously, the outlet nozzle may have a shoulder on the downstream side of the first valve and located to abut the first valve during use to alter the flexibility of the first valve so the first valve is stiffer when flexed in the downstream direction when water flows through the inlet and toward the filter than when flexed in the upstream direction when water flows away from the filter and toward the inlet. Thus, the first valve may have a non-linear stiffness. The non-linear bending stiffness of the first valve may be provided by supporting an inner portion of the first valve on a downstream side of the first valve against movement in the downstream direction during pressurized flow occurring during use. The non-linear bending stiffness is oriented so that the first valve requires greater pressurized flow in downstream direction toward the filter to deform the first valve and requires less or no pressurized flow in the upstream direction to block flow past the first valve.

The second valve is advantageously an umbrella valve having a stem and a top with the stem aligned with the outlet flow path and the blocking the water from flowing out the outlet flow path when the cartridge is not in use. The stem may be held by a support extending across the outlet flow path. The stem may be mounted in a cup to selectively block flow out of a downstream end of a cylindrical main filter with the umbrella valve sealing against the cup to block flow and with the bottom of the cup having at least one opening through which water can pass during use of the cartridge. The second valve also preferably has a non-linear bending stiffness and is oriented so that the second valve requires greater pressurized flow in the downstream direction to allow water to flow past the second valve and requires less or no pressurized flow in the upstream direction to block water flow past the second valve.

A second filter that is configured to trap smaller particles than the first filter may be located in the outlet flow path between the second filter and the outlet nozzle. Advantageously the second filter is a disc blocking one end of the cup within which the umbrella valve is located, with the umbrella valve having a curved top that flexes between open and closed positions within the cup to open and block flow through the cup and thus through the filter cartridge.

There is also provided a water filter cartridge having a housing with a water inlet and a water outlet with a flow path carrying water from the inlet, through a filter in the housing and to the outlet. The inlet and outlet have seals located and configured to form a water tight connection with a water source and to provide filtered water from the cartridge to an appliance during use of the cartridge. The cartridge has first and second concentric, tubular nozzles aligned along a longitudinal axis. The second nozzle is smaller than the first nozzle and passes through at least part of the first nozzle to form a space therebetween defining a first portion of a flow path. The second tubular nozzle defines a second portion of the flow path with a first filter located between and in fluid communication with the first and second flow paths. To restrain leakage when the cartridge is not in use a first diaphragm valve is connected to the second nozzle and located and configured to releasably block the first portion of the flow path. The first valve is resiliently urged into a first, closed position. The first valve has a second, open position allowing fluid flow past the first valve. A second umbrella valve is located and configured to releasably block the second portion of the flow path. The second valve is resiliently urged into a first, closed position. The second valve has a second, open position allowing fluid flow past the second valve. Not only do the first and second valves block water flow out of the cartridge when the cartridge is removed from the appliance, but because the valves provide an air tight seal so the cartridge is a sealed unit. The valves prevent air from entering the cartridge and that creates a sealed unit vacuum which further retards water flow.

In further variations, the first and second valves each have a non-linear stiffness. The first valve may have a support on the downstream side of the diaphragm so the first valve is stiffer in the downstream direction than in the upstream direction. Advantageously, the first valve is biased closed in a downstream direction and the second valve is biased closed in an upstream direction. Advantageously, the second nozzle forms the outlet and the second valve is an umbrella valve. The main filter is advantageously a cylindrical filter having a central hole extending along the longitudinal axis and then the second valve may be mounted in a cup nested inside that central hole at a downstream end of cylindrical filter. The umbrella valve may then seal against the cup to block flow with the cup having holes therethrough to allow water to flow through the cup when permitted by the second valve. Finally, a fines filter may be placed on the downstream side of the cup and interposed between the cup and the outlet nozzle.

There is also provided a water filter cartridge for use with an appliance and a source of water. The cartridge has a filter in a housing with a flow path having a first opening on the cartridge that is in fluid communication with a first surface of the filter and a second flow path in fluid communication with a second surface of the filter. The second opening on the cartridge, the first and second flow paths provide the only fluid ingress and egress to the filter cartridge. The filter cartridge also a first annular valve on the first flow path. The first valve is biased closed to block flow along the first flow path in either the upstream or downstream direction when the cartridge is removed from the appliance after use. The first valve is configured to open when a downstream pressure differential across the first valve is less than the pressure provided by the source of water during use of the cartridge. The filter cartridge also has a second valve located on a portion of the second flow path that passes through the first annular valve so the first valve encircles a portion of the second flow path. The second valve is located between the second opening and filter. The second valve is biased closed to block flow along the second flow path in either the upstream or downstream direction when the cartridge is removed from the appliance after use. The second valve is configured to open when the pressure differential across the second valve is less than the pressure provided by the source of water during use of the cartridge.

In further variations, this last filter may have the first valve configured as a diaphragm valve and the second valve configured as an umbrella valve. Further, the diaphragm valve may have an outer portion that seats against the inside of the housing or an attachment on the inside of the housing while the umbrella valve has an outer portion that seats against a surface of an annular surface encircling the second flow path. The umbrella valve preferably has a curved top with a stem held in a cup located in the flow path passing through the middle of a cylindrical filter, with the cup located at one end of the filter. The filter cartridge advantageously has the first opening formed on an annular inlet nozzle and the second opening formed on a tubular outlet nozzle.

### BRIEF DESCRIPTION OF THE DRAWINGS

These and other advantages of the invention will be better understood by reference to the following description and drawings, in which like numbers refer to like parts throughout, and in which:

Fig. 1 is an exploded perspective view of an illustrated embodiment of a water filter cartridge having valves to prevent leakage after the cartridge is removed from an appliance;

Fig. 2 is a side view of the assembled water filter cartridge of Fig. 1;

Fig. 3 is a top view of the water filter cartridge of Fig. 2;

Fig. 4 is a sectional view of the filter cartridge taken along 4-4 of Fig. 4;

Fig. 5 is a sectional view of the filter cartridge taken along 5-5 of Fig. 3,

Fig. 6 is a partial sectional view of the top end of the filter cartridge taken along section 6-6 of Fig. 5 with an umbrella valve and diaphragm valve each in a first position to prevent the flow of water past the respective valves;

Fig. 7 is a partial sectional view of the top end of the filter cartridge taken along section 6-6 of Fig. 5 with the valves in a second position to permit the flow of water past the valves when the pressure differential across each of the valves is sufficient to open the valves and allow water to flow through the filter;

Fig. 8 is a perspective view of a diaphragm valve as shown in Fig. 1;

Fig. 9 is a bottom perspective view of an umbrella valve as shown in Fig. 1;

Fig. 10 is a top perspective view of the umbrella valve of Fig. 9;

Fig. 11 is a side view of the umbrella valve of Fig. 9, with the opposing side view being a mirror image thereof;

Fig. 12 is a cross-sectional view of the umbrella valve of Fig. 9 taken along section 12-12 ofFig. 11;

Fig. 13 is a perspective view of a bottom of a cup configured to hold the umbrella valve;

Fig. 14 is a side view of the cup of Fig. 13;

Fig. 15 is a bottom view of the cup of Fig. 13;

Fig. 16 is a top view of the cup of Fig. 13; and

Fig. 17 is a sectional view taken along section 17-17 of Fig. 16.

### DETAILED DESCRIPTION

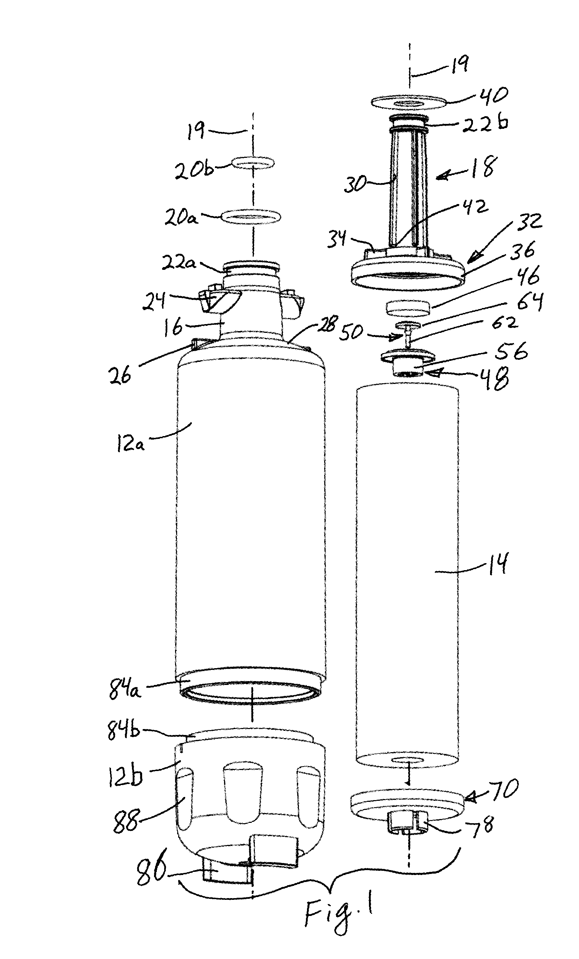

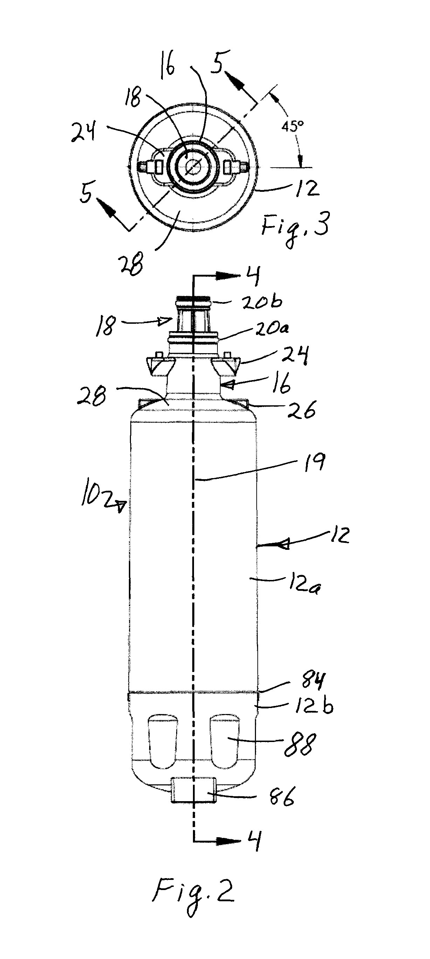

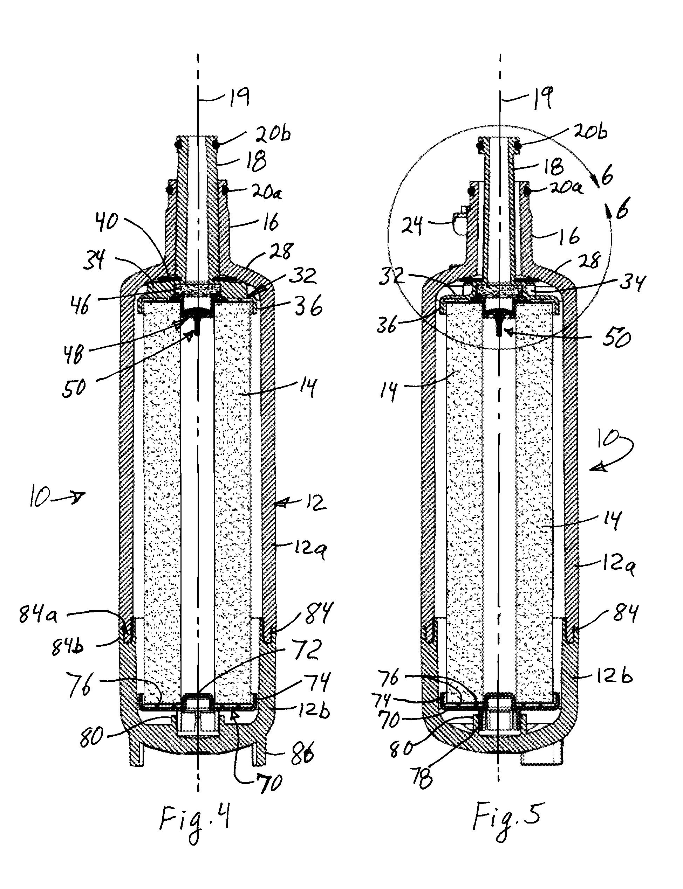

Referring to Figs. 1-7, and especially Figs. 4-7, a water filter cartridge 10 (Fig. 2) having a housing 12 containing a water filter 14 is configured to be removably connected to an appliance (not shown) to provide filtered water to the appliance. During use of the filter cartridge 10, unfiltered, pressurized water from a source (not shown) enters the housing 12 through a tubular inlet 16, passes through the filter 14 and filtered water flows out a tubular, outlet 18, usually under pressure. As used herein, water flow along that flow path from the inlet through the outlet is called the downstream flow or the downstream flow path or the downstream side or the downstream direction etc. Water flow in the opposite direction is referred to herein as the upstream flow, or the upstream flow path or the upstream side or the upstream direction etc. The filter cartridges 10 may be used in various orientations, with a longitudinal axis 19 of the cartridge usually being either vertical or horizontal. As used herein, the top of the cartridge 10 or housing 12 refers to the end having the inlet 16 and the direction toward the inlet 16 as shown in the figures and the bottom of the cartridge refers to the opposing end of the housing 12. The relative directions of up or above refer to directions along the longitudinal axis 19 toward the inlet 16 and the relative terms down, or below are with respect to the opposing direction along longitudinal axis 19.

The housing 12 usually has two parts 12a, 12b with a bottom 12b being fastened to the top 12a to form an enclosure for the filter 14 within the housing, with the housing enclosure being water tight except for the inlet and outlet. The top part of the housing 12a has an inlet opening 16 that may have various configurations depending on the configuration of the mating apparatus of the appliance with which the cartridge 10 is used. Advantageously the inlet opening 16 is formed by a first, tubular inlet nozzle 16. Usually, at least one O-ring seal 20a is placed in a groove 22a on an exterior surface of the first nozzle, immediately adjacent a distal end of the inlet nozzle 16, in order to provide a seal with a mating surface on a manifold or on the appliance with which the cartridge 10 is used.

There are various ways of installing the filter cartridges 10 and the location and configuration of the connecting attachments 24 will vary. In the depicted embodiment the cartridge is configured to insert into a mating receptacle of a refrigerator (not shown) with the axis 19 aligned at about a 60° angle with the nozzles 16, 18 oriented upward. The cartridge 10 is inserted axially into a mating receptacle and then rotated into a horizontal position so that mating parts in the mating receptacle (not shown) engage the connecting attachments 24 that extend outward from the exterior sides of nozzle 24 in order to secure the cartridge 10 to the appliance, and to place the inlet and outlet nozzles 16, 18 in fluid communication with the inlet and outlet of the appliance, with the O-rings 20a, 20b helping to provide a fluid tight connection during use.

Other appliances will require other connecting attachments 24, such as radially extending lugs with inclined ramps on the lugs, extending outward from the inlet nozzle 16. In all cases, the connecting attachments are located and configured to mate with corresponding parts and recesses in the manifold or appliance to which the cartridge 10 is connected during use. Many of the connecting attachments 24 typically have inclined surfaces so that rotation of the cartridge 10 causes movement of the cartridge along its longitudinal axis 19 like a screw in order to help force the cartridge into sealing engagement with the appliance. Position stops 26 may be placed on the nozzle 16 or housing 12 to help position the cartridge in or relative to the appliance or manifold during use and typically engage fluid seals such as the O-rings 20 with mating sealing surfaces in the appliance or manifold. The connecting apparatus 24 may also provide such a positioning function and the positioning stops 26 may also serve a connecting function, depending on the design of the mating surfaces of the apparatus with which the cartridge 10 is used. A shoulder 28 may extend laterally between the bottom end of the inlet nozzle 16 and the outer surface of the body of the cartridge 10 and its upper portion 12a. The inside of the inlet nozzle is advantageously a smooth, contoured surface as best shown in Figs. 4-7.

The second, outlet opening 18 may have various configurations depending on the configuration of the mating apparatus of the appliance with which the cartridge 10 is used. Advantageously, the outlet opening is formed by a tubular nozzle 18 that fits through and is coaxial with the first, inlet nozzle 16 so that the outlet nozzle 18 is inside the inlet nozzle 16, although the parts could be reversed with the inlet nozzle inside the outlet nozzle. A series of ribs 30 on the exterior surface of the outlet nozzle 18 position the nozzles 16, 18 relative to each other and ensures a gap between the nozzles that forms an inlet fluid passageway between the tubular walls of each nozzle. Advantageously, the interior surface of the first, inlet nozzle 16 is a tapered conical surface, and the edge of the ribs 30 have a mating taper so the nozzles 16, 18 nest together, separated by the ribs 30. The depicted embodiment uses four longitudinal ribs 30, but other numbers of ribs and orientations of ribs could be used as long as a flow path is provided between the nozzles. The ribs 30 need not be continuous. An O-ring seal 20b may be placed in a groove 22b on an exterior surface of the second, outlet nozzle 18, immediately adjacent a distal end of the outlet nozzle 18.

The bottom of the second nozzle is formed of a base 32, preferably circular, having a plurality of protrusions such as ribs 34 on a forward (top) facing, exterior surface of the base 32. A depending flange or skirt 36 around the periphery of the base 32 forms a shallow, downward facing or inverted cup that fits over the end of the filter 14 during use. The outlet nozzle 18 has a central flow path along its longitudinal axis 19, advantageously concentric with the longitudinal axis 19 of the housing 12 and inlet nozzle 16. The outlet nozzle 18 is inserted through the inlet nozzle until the base ribs 34 are close to but spaced apart from the inside surface of shoulder 28 or some other projection on the housing 12. The base ribs 34 can help separate the outlet nozzle base 32 from the shoulder 28 of the housing 12 so that water flowing in the inlet fluid passageway between the inlet and outlet nozzles 16, 18 can also flow between the base 32 and housing 12, through the space between the base ribs 34. But advantageously, the longitudinal ribs 30 on outlet nozzle 18 abut the inside surface of inlet nozzle 16 to position the nozzles relative to each other.

Referring to Figs. 4-8, a first valve 40 has an inner periphery that fits into a groove 42 in the outlet nozzle 18 to connect the seal to the outlet nozzle 18. The first valve 40 is shown as a flexible, diaphragm valve, preferably flat and having an annular or ring shape. An annular, diaphragm valve is preferred for valve 40. The valve 40 may be referred to as a flapper check valve since during use it flaps between first sealing and second unsealing positions to allow flow in a downstream direction and to stop or check flow in an upstream direction.

The inner circumference of the first valve 40 is slid over the ribs 30 and into groove 42 to hold the inner periphery of the valve 40 in place. The outer periphery of the first valve 40 preferably abuts the inner surface of the housing 12a, preferably on the inside of the housing shoulder 28. The inside of the shoulder 28 is preferably a smooth surface and is advantageously downwardly and outwardly inclined so that an outer portion of the valve 40 abuts that smooth surface around the entire circumference of the housing 12 and valve 40. The first valve 40 thus extends outward from the outside of the outlet nozzle 18 to engage a valve seat, with a valve seat being formed in the illustrated embodiment on the inside of the top housing 12a, preferably by an inclined surface on the inside of that housing 12a by a shoulder on the to the housing 12, and more preferably by a downwardly and outwardly inclined surface on the inside of shoulder 28.

Advantageously, the groove 42 has a bottom side of the groove at the top surface of a stepped, circular boss 44. The base ribs 34 extend outward from the sides of the boss 44, preferably radially outward. The top of the boss 44 is at about the same location as and preferably slightly above the top of the base ribs 34. The groove 42 (Fig. 1) advantageously extends only into the longitudinal ribs 30 so that the first valve 40 has its inner periphery held by the ribs 30. Advantageously the bottom of the diaphragm valve 40 lays flat against the top surface of boss 44 but there is a slight space or gap between the bottom of the first, diaphragm valve 40 and the top of the base ribs 34. Optionally, the inner periphery of the diaphragm valve 40 is held in groove 42 at a location slightly above the location at which the outer portion of the diaphragm valve abuts the inside of the housing 12 so that the outer portion of the valve 40 is resiliently urged against the inside surface of housing 12, preferably at the shoulder 28. In that configuration, the diaphragm valve 40 extends in a plane orthogonal to the longitudinal axis 18 with an inner portion of the diaphragm supported on the bottom side by the boss 44 and the top side of the outer periphery of the diaphragm abutting the downwardly and outwardly surface of the inside of the shoulder 28.

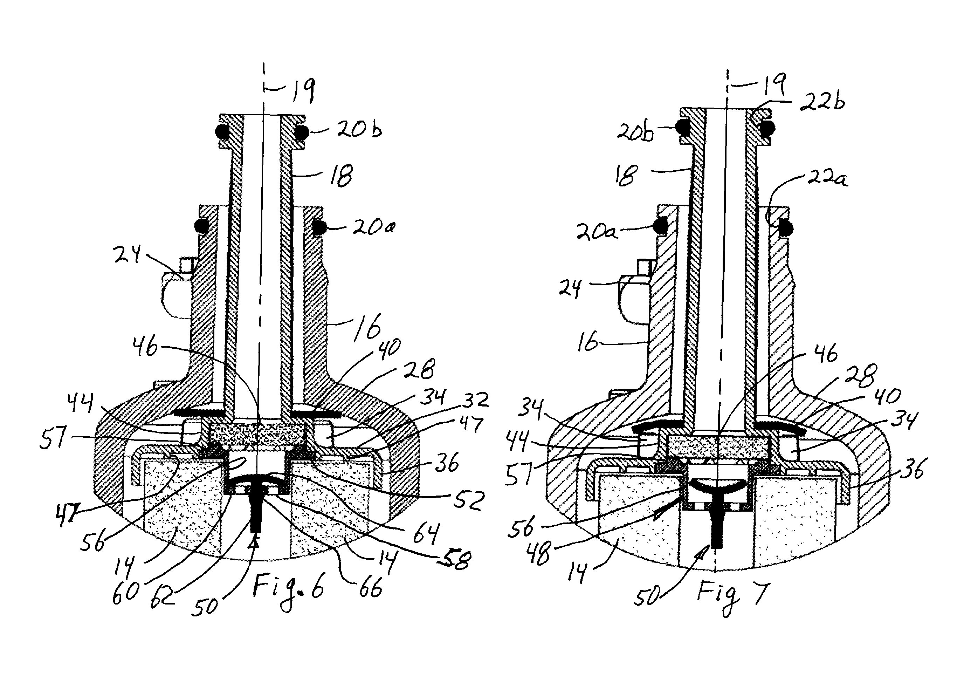

As best seen in Figs. 6-7, the outlet passage in nozzle 18 is a slightly tapered cylinder that passes through the center of the circular boss 44, base 32 and the depending flange 36. The ribs 34 extend outward from the cylindrical sides of the boss 44 a short distance and preferably do not extend far enough to reach the radial location of the depending flange 36. The bottom surface of the base 32 may have one or more annular rings 47 forming short flanges that are concentric with and extending in the same direction as the depending flange or skirt 36. Advantageously, one ring 47 is adjacent the interior wall of the boss 44 but offset radially outward from that wall of the boss 44.

A disc shaped, secondary filter 46 acts as a fines filter and fits into this inner ring 47, preferably with a snug fit or slight interference fit. The secondary filter 46 is a micro filter, optionally used to prevent small carbon fines from the filter 14 from exiting the cartridge. A spun polypropylene pad is believed suitable for filter 46.

The main filter 14 may take various configurations depending on the nature of the appliance with which the cartridge 10 is used, but is shown as a cylindrical filter having an outer diameter smaller than the inner diameter of housing 12 and a length along the longitudinal axis 19 that is shorter than the length of housing 12. The top of the filter 14 ends below the shoulder 28 on the inside of the housing 12a. Advantageously the filter 14 just fits inside the depending flange 36 on outlet nozzle base 32 so that the base 32 and its flange 36 help keep the filter from moving sideways or laterally relative to the longitudinal axis 19. The annular ribs 47 on the downwardly facing side of the base 32 may be used to help glue or adhere the base 32 to the top of the filter 14.

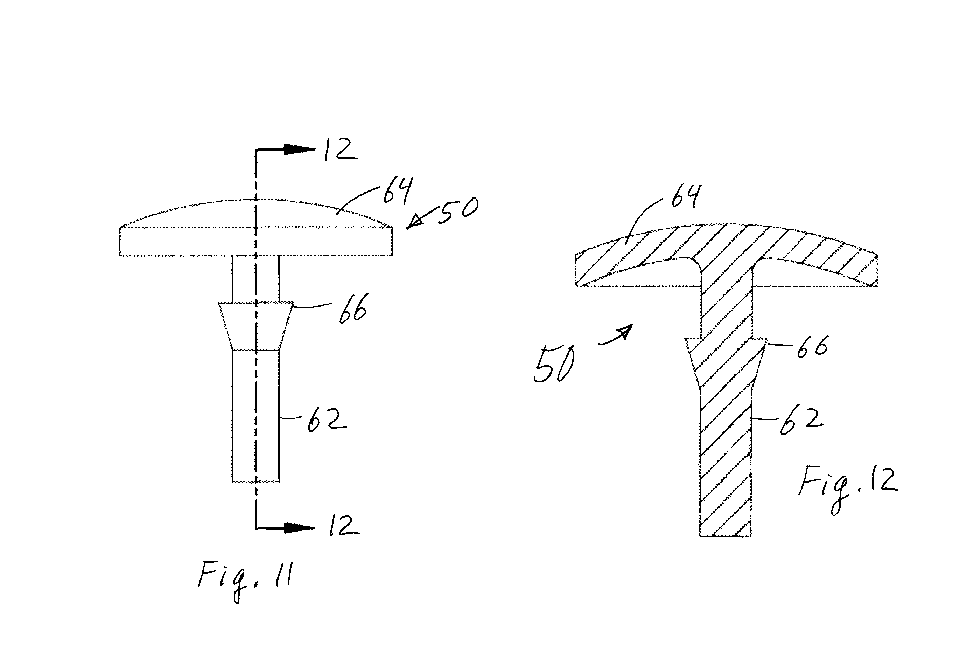

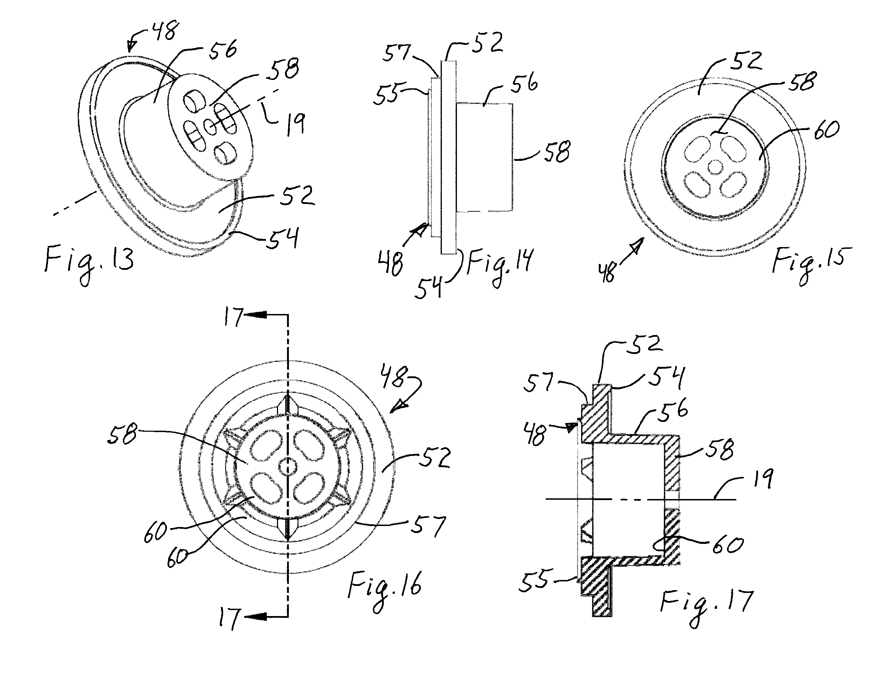

Referring to Figs. 6-7 and 9-17, a support 48, preferably taking the form of a cup, holds a second valve 50 between the second filter 46 and the main filter 14. The cup-shaped support 48 and second valve are located in the middle of the filter 14 so that during use pressurized, filtered water flows past the second valve 50, through the second valve 50 and out the opening formed by the outlet nozzle 18. The cup 48 has an outwardly extending flange 52 at the top or upper end of its sidewall 56. The flange 52 in turn may have an optional depending lip 54 at the outer circumference of the flange or located on a bottom side of the flange 52. The flange 52 may also have an optional upward facing ring or lip 55 on its upper surface. A cylindrical sidewall 56 joins the inner circumference of the flange 52 with a cup bottom 58 that is joined to the bottom of the sidewall. The cup bottom may have a centrally located hole on the longitudinal axis 19, and the bottom also has a number of openings through which filtered water can flow. The bottom 58 may take the form of a ring supported by spokes extending from the sidewall 56, preferably extending inward from a flange 60 around the bottom edge of the sidewall. As best seen in Figs. 6-7 and 17, the flange 52 may have a notch 57 forming an annular boss so that an inside corner of the base 32 fits into the notch 57 and rests against flange 52 in order to position the base 32 and its outlet nozzle 18 relative to the cup 48. Likewise, the notch 57 helps position the cup 48 and second valve 50 relative to the nozzle 50.

The second valve 50 is preferably an umbrella valve having a central stem 62 with a curved top 64 at one end of the stem and a locking flange 66 between the top 64 and a distal end of the stem. The distal end of the stem 62 and the locking flange are passed through the central hole in the bottom 58 of the cup 48 so fasten the stem and thus the valve 50, to the cup. The locking flange 66 is preferably frusto-conical in shape with the larger diameter portion of the flange 66 abutting the bottom surface of the bottom 58 to restrain pulling the umbrella valve 50 out of the cup 48. The flange 66 is located relative to the top 64 so that when the flange locks the stem in position relative to the cup 48, the outer periphery of the top 64 against the cup 48, preferably sealing against an inwardly extending flange 60 at the bottom of the sidewall 56, so as to block unpressurized flow past the valve 50.

Referring to Figs. 6 and 7, the umbrella valve 50 has a first, rest position (Fig. 6) in which the valve 50, preferably outer portion of the valve and more preferably the periphery of the top 64, provides a water tight seal to prevent downstream flow of water past the valve 50. The umbrella valve 50 has a second position (Fig. 6) in which the water flow opens valve 50 to allow downstream flow past the valve 50.

The second valve 50 is located on the downstream side of the filter 14 and while it could also be downstream of the secondary filter 46, the second valve 50 is shown as being located between the main filter 14 and the secondary, fines filter 46. In the depicted embodiment the second valve 50 is held in position by the cup 50 which is sized so the cylindrical sidewall 56 fits inside the downstream end of the cylindrical hole of the annular filter 14. The cup flange 52 is clamped between the secondary filter 46 and the main filter 14, and advantageously has the upper lip 48 seal against the a bottom surface of the base 32 of the outlet nozzle 18 and the lower lip seal 54 against the filter 14. The base 32 and cup 48 block fluid flow from the top of the main filter 14 except through the openings in the bottom of the cup 48.

A bottom support 70 encloses the bottom of the filter 14 and advantageously has a central cylindrical boss 72 sized and located to fit into the bottom end of the cylindrical hole through the filter 14. The support 70 may have a peripheral skirt or flange 74 extending upward toward a top of the cartridge 10 and extending for a short distance along the sides of the filter 14. Optionally, one or more annular rings 76 may extend upward from the bottom support 70 to abut the bottom of the filter and hold the filter slightly away from the support. The rings 76 may be used to help glue or adhere the support 76 to the bottom of the filter 14. The bottom support 76 may be viewed as an end cap on the bottom of the filter 14, just as the base 32 and flange 36 may be viewed as an end cap on the top of the filter 14.

Opposite the upward extending central boss 72 is a downwardly extending cylindrical flange 78 (Figs. 1, 4, 5), which is sized and located to fit between upwardly extending concentric cylindrical walls 80, 82 (Figs. 4, 5) centered on the longitudinal axis 19. The concentric cylindrical walls 80, 82 extend upwards from the bottom 12b of the housing 12. The central boss 72 and outer flange 74 fit over the bottom of the filter 14 to hold the filter 14, with the cylindrical flange 78 mating with the concentric walls 80, 82 to hold the support 70, and thus the filter 14, centered in the housing 12. The mating cylindrical walls or flanges 78, 80, 82 may be continuous or segmented as shown by wall 78 in Fig. 1.

As best seen in Figs. 1, 4 and 5, the top and bottom portions 12a, 12b of the housing 12 are fastened together at joint or juncture 84 along the length of the cartridge 10. The location will vary with the cartridge. Various fastening mechanisms may be used to join the housing parts 12a, 12b at juncture 80, including lap joint, threaded connections, or the depicted tongue-in-groove connection, or others. The juncture 80 may be releasable, or may be permanent, as for example, by using adhesives, sonic welding, or friction welding to join the housing parts. Usually permanent joints are used to guard against leakage during use.

Tabs 86 may optionally extend from the bottom 12b parallel to the longitudinal axis 19 to allow a user to rotate the cartridge 10 or otherwise manipulate the cartridge 10 during insertion and removal. Likewise, gripping indentations 88 (Figs. 1-2) may be provided on the housing 12, preferably at the end of bottom 12b, to make it easier for users to manually grip and manipulate the cartridge 10.

The assembly of the cartridge may be achieved several ways, but advantageously the parts are first formed separately, with housing 12a and 12b being preferably formed by injection molded plastic such as polypropylene, ABS, polyamids, acetals, or other material suitable for use with water filter cartridge 10. The bottom support 70 (end cap) and cup 48 are likewise injection molded of the same material as the cartridge housing 12. The primary filter 14 is formed of any suitable filter material, preferably porous carbon. Secondary filter 46 is formed of suitable material for filtering out any fines from the primary filter, with spun polypropylene believed suitable for secondary filter 46 when the primary filter is made of carbon. The umbrella valve 50 and first valve 40 are preferably integrally formed of a single, continuous piece of flexible material, preferably an elastomer. Virgin Buna-n (Nitrile) is believed suitable, with a hardness of about 70 durometer believed suitable for valves 40, 50. O-rings 20a, 20b are also formed of suitable elastomer or rubber material and may be made of the same material as valves 40, 50.

There are various ways to assemble the parts to form the cartridge 10. Broadly described with reference to Fig. 1, the parts on the right side of Fig. 1 are assembled to form a sub-assembly that is inserted into the upper housing 12a, after which the bottom 12b of the housing is fastened to the upper housing 12, with the juncture 84a-84b sealed to enclose the sub-assembly. The O-rings 20a, 20b are then placed on the nozzles 16, 18, respectively.

There are many details and possible variations in the assembly of the cartridge 10. After the parts are formed, the diaphragm valve 40 may be placed over the ribs 30 on the outlet nozzle 18 and the diaphragm valve placed into position, preferably by seating the inner periphery of the valve in groove 42. The outlet nozzle 18 may then be inserted through the inlet nozzle 16. The optional secondary filter 46 may be inserted into the mating recess of boss 44 (Figs. 6 & 7) on base 32 either before or after the nozzles 16, 18 are mated together or nested together, but is preferably inserted before mating the nozzles. Likewise, the umbrella valve 50 may be inserted into its support, here the cup 32, and that sub-assembly may be fastened to the base 32 before or after the nozzles 16, 18 are nested together, but preferably the upper lip 48 of cup 32 is inserted into the recess formed by boss 44 before the nozzles are nested, with the upper lip 48 having a tight fit so as to hold the secondary filter 46 in place during insertion of the outer nozzle 18 through inner nozzle 16. The cylindrical carbon filter 14 may be inserted before or after the nozzles are nested together, but is preferably has the sidewalls 56 of cup 32 inserted into the central cylindrical hole of the filter before the nozzles are nested together. Thus, advantageously, the outer nozzle 18, diaphragm valve 40, secondary filter 46, valve support or cup 32, umbrella valve 50, and cylindrical filter 14 are assembled into a sub assembly before inserting the outer nozzle 18 through the inner nozzle 16 (or passing inner nozzle 16 over outer nozzle 18). Adhesive may be applied to the top of the filter 14 to fasten it to the bottom of the base 32 and optionally to the flange 36 of the base 32.

After the nozzles 16, 18 are nested together, the cylindrical filter 14 is advantageously longer than the first or top housing portion 12a, so the bottom of the filter extends beyond housing portion 12a. The bottom support 70 may then be placed on the bottom of the filter 14, although that could also have been done before nesting the nozzles 16, 18. The bottom support 70 (or bottom end cap) is preferably glued or adhered to the bottom of the filter 14. The bottom portion 12b of the housing 12 may then be fastened to the top housing portion 12a to form a water tight enclosure. O-ring seals 20a, 20b may be placed in their respective locations on nozzles 16, 18 before or after the nozzles are nested together. The nozzles 16, 18 are configured and the seals 20 are configured and located to mate with corresponding structures in the appliance and a water supply (which may be through the appliance) so that unfiltered water from a source is filtered by the cartridge 10 and provided to the appliance.

When assembled, there is a space between the inner and outer nozzles 16, 18 through which unfiltered water from a water source (not shown) can flow until it reaches the first diaphragm valve 40 which is resiliently urged to a closed position to block upstream and downstream fluid flow past the first valve. The first valve 40 is configured or designed such that water pressure from the appliance is sufficient to open the first valve and allow fluid to flow downstream past the first valve 40. The cylindrical filter 14 is spaced apart from the sidewall of housing 12 so once water is past the first valve the water may flow into the sides of the filter 14, with the base 32 of the outlet valve and bottom support 70 preferably being adhered to the filter 14 so no water passes between the filter 14 and the base 32 and support 70, and to force any water flowing out of the top or end of the filter 14 to reenter that filter 14.

Since the space between the nozzles 16, 18 provides an annular flow path to the first valve 40, and since the first valve 40 seals the entire circumference of the top part of the housing 12a, water may enter around the entire outer periphery of the cylindrical filter 14 for rapid access to the filter 14. Water flows under pressure from the appliance through the filter 14 and into the cylindrical hole at the center of the annular filter 14, where water is forced against the second valve, umbrella valve 50. Without pressure from the appliance the umbrella valve 50 seals against its support, cup 48 to block flow as in Fig. 6. The valve 50 is configured so that under flow pressure from the appliance the valve moves to its second, open position where water flows downstream past the second valve 50 (Fig. 7), and upon cessation of flow the valve 50 again closes (Fig. 6). Water flow is needed to open the valves 40, 50 as they are biased closed. Once water is past the second valve 50, the water flows through the secondary filter which removes any carbon fines from filter 14. From the secondary filter 46 the filtered water flows through outlet nozzle 18 and into the appliance.

During use, the cartridge 10 is inserted into an appliance such as a refrigerator, using the gripping surfaces 88 and manipulating tabs 86, and typically the cartridge is rotated a half turn so the mounting connection 24 move the nozzles 16, 18 axially so the water inlet 16 forms a fluid tight connection with a source of unfiltered water and the outlet 18 forms a water tight connection with the appliance's inlet for filtered water. When the appliance needs water, as when a user pushes a release for a water dispenser, then water flows through the filter cartridge 10, opening first and second valves 40, 50. When the user releases the water dispenser the flow of water stops and the valves 40, 50 return to their closed position. This continues until the cartridge is depleted or otherwise replaced. When the cartridge 10 is to be replaced, a user grabs the indentations 88 or tabs 86 to rotate the cartridge 10 and remove it from the appliance. Since the valves 40, 50 are in the closed position no water in the cartridge between the valves flows past the valves, thus minimizing the water that may be dripped on the floor or elsewhere from removing the cartridge. Since there is some space between the valves 40, 50 and the ends of the respective inlet and outlets 16, 18, respectively, some slight amount of water may drip out. It is thus advantageous to place the valves 40, 50 as close to the inlet and outlet of the canister as practical.

The exact configuration of the appliance can vary, and thus the nozzles 16, 18, and the connecting attachments 24, and the shape and orientation of the housing 12 and any manipulating tabs 86 can vary. Indeed, by reversing the valves 40, 50 and the mating surfaces with which the valves seal, the flow path through the cartridge 10 may be reversed. Further, the nozzles 16, 18 need not be nested as some appliances uses separated inlet and outlet nozzles rather than coaxial nozzles, and the configuration and location of the valves 40, 50 may be varied accordingly.

As best seen in figs. 6-7, the first valve 40 has a non-linear stiffness, with the valve preferably located so that it deforms easier with upstream flow than with downstream flow. As water pressure on the upstream side exceeds the pressure on the downstream side of the diaphragm valve 40, the diaphragm is pushed downstream. But the boss 44 abuts the inner portion of the diaphragm so that only the outer periphery of the annular diaphragm bends downstream to allow water to flow past the outer periphery of the diaphragm and the inside of the housing 12a. In contrast, if water were flowing upstream, the water pressure is applied to the outer periphery of the annular diaphragm valve 40, but entire radial length of the annular diaphragm may flex. Thus, the structure supporting the flat, annular diaphragm is such that the diaphragm is stiffer in the downstream direction than in the upstream direction.

The deflection of the valve 40 thus requires more force in the downstream flow direction than in the upstream flow direction, or it requires a greater pressure differential across the valve 40 to deform the valve 40 in the downstream direction than in the upstream direction. By resiliently urging the outer periphery of the diaphragm valve 40 against the inside of the body 12a, the force to open versus the force to close the first valve 40 is further increased. By varying the location of the inner periphery of the valve 40 along the longitudinal axis relative to the location where the outer periphery of the valve 40 abuts the inside of shoulder 28, the amount of force with which the valve 40 is preloaded in the closed position can be varied. The first valve 40 thus has a non-linear stiffness that changes with flow direction. The non-linear stiffness is achieved by the manner in which the valve is mounted or supported in the cartridge 10.

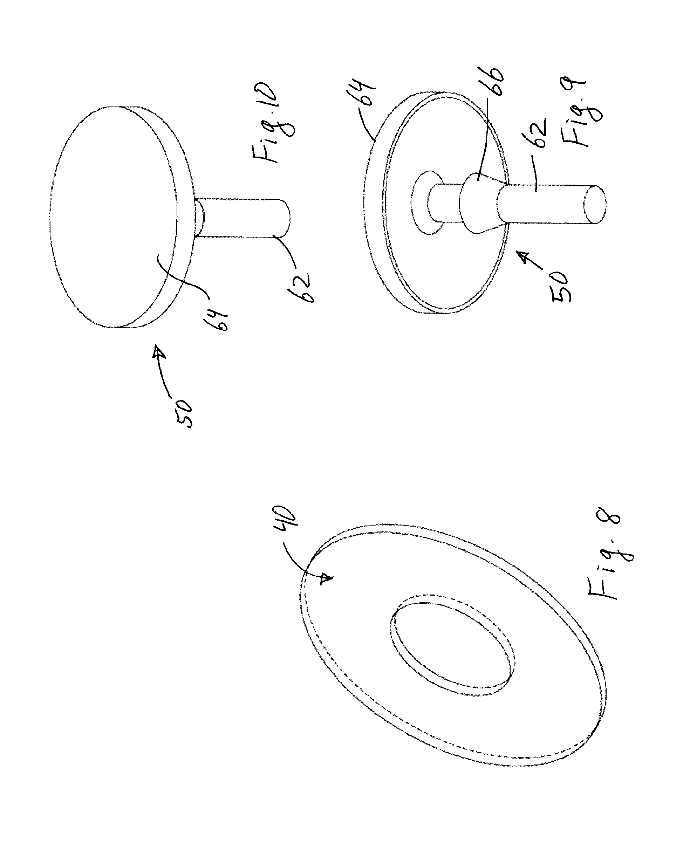

The second valve 50 also may also have a non-linear stiffness. Preferably, though, the non-linear stiffness is achieved by construction of the valve rather than the way the valve is mounted to permit easier flexation in one direction than another as with first valve 40. Referring to Figs. 9-12, the umbrella valve 50 has a curved top 64 that bends easier in the direction in which the top 64 is curved. The curvature of the top 64 resists straightening and thus is stiffer in a direction that seeks to straighten the top 64. The second valve 50 is mounted in the support structure or cup 48 so that the resilient stem 62 is slightly stretched to resiliently urge the periphery of the curved top 64 against the bottom of cup 58 which in turn deforms the top 64 to provide a water tight seal against the cup. When the second valve 50 is opened by applying sufficient water flow against the underside of the curved top 64, or by applying sufficient pressure differential across the top 64, then the curved top moves in the downstream direction to allow water flow. The top 64 does not flex past a critical point where the top 64 buckles and does not resume the original closed position in which the valve 50 seals against the cup to block flow. But the curved top 64 may move past a flat position to an inverted position, but the resilient valve top 64 resumes its original curved configuration. The cup sidewall 56 is slightly larger than the diameter of the valve top 64 to allow the top 64 to invert positions during use to thereby allow flow and stop flow.

Both the first and second valves 40, 50 are resiliently urged to a closed position which blocks water flow past the valve. The first valve 40 on the inflow path is resiliently urged to a seated position blocking upstream flow past the valve. The first valve 40 opens and allows flow past the valve when the pressure on the upstream side is greater than on the downstream side of the valve 40. The second valve 50 on the outflow path is resiliently urged to a seated position blocking downstream flow. The second valve 50 opens and allows flow past the valve when the pressure on the downstream side is greater than the pressure on the upstream side of the valve 50. A pressure differential of about 1-2 psi is believed suitable to actuate the first valve 40 and allow water flow while a pressure differential of about 5-10 psi is believed suitable to fully open the valve 40 for maximum flow, and possibly as much as about 15 psi. A pressure differential of about 2-5 psi is believed suitable to actuate the second valve 50 and allow water flow past the valve 50 while a pressure differential of about 10-20 psi is believed suitable to fully open the valve 40 for maximum flow. The water pressure from a typical water source used with an appliance such as a refrigerator is typically about 60 psi.

The first valve 40 is preferably located as near the outlet orifice of the inlet nozzle 16 as is practicable, and is shown located at the bottom of the inlet nozzle 16 at the juncture of the nozzle 16 and body 12, at shoulder 26. The second valve 50 is preferably located as near the outlet orifice of the outlet nozzle 16 as is practicable, and is shown located at the bottom of the outlet nozzle 18 near the juncture of the nozzle 18 and body 12, slightly below the shoulder 26 and slightly below the inlet valve 40. The second valve 50 is located at the downstream end of the filter 14, and preferably between the downstream end of the filter 14 and the downstream entrance to the outlet nozzle 18.

Thus, the water filter cartridge 10 for an appliance such as a refrigerator has an inlet 16 and outlet 18 with a filter 14 in between with the inlet and outlet connected by a flow path. The first valve 40 is adjacent the entrance opening to the inlet 16 and is biased closed to block flow through the inlet into the filter cartridge 10. The second valve 50 is adjacent the exit opening of the outlet 18 and is biased closed to block flow out of the filter cartridge. The valves 40, 50 block flow out of the inlet and out of the outlet when the cartridge is not connected to the appliance. The valves 40, 50 allow flow into the filter cartridge 10 when the pressure differential from the appliance on the inlet 16 and outlet 18 exceeds a predetermined amount sufficient to overcome the closing bias force on the valves. The closing bias force on each valve 40, 50 is preferably about the same.

As required, detailed embodiments of the present invention are disclosed herein; however, it is to be understood that the disclosed embodiments are merely exemplary of the invention, which may be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure.

The above description is given by way of example, and not limitation. Given the above disclosure, one skilled in the art could devise variations that are within the scope and spirit of the invention. Further, the various features of this invention can be used alone, or in varying combinations with each other and are not intended to be limited to the specific combination described herein. Thus, the invention is not to be limited by the illustrated embodiments but is to be defined by the following claims when read in the broadest reasonable manner to preserve the validity of the claims.

## Claims

1. A water filter cartridge having a housing with a water inlet and a water outlet which are connected inside the cartridge by an inlet flow path and an outlet flow path having a water filter therebetween, the cartridge may optionally have at least one retaining lug located that is configured to releasably fasten the cartridge to an appliance during use and has a seal located and configured to form a water tight connection extending the flow path to the appliance during use, with the filter cartridge being configured so that during use pressurized water flows along the flow path, through the filter and out the outlet to provide filtered water, the filter cartridge comprising:
a first valve inside the cartridge and located to extend across and selectively block the inlet flow path, the first valve being resiliently biased toward a first position blocking the inlet flow path and blocking flow past the first valve, the first valve having a second position in which the pressurized flow of water along the inlet flow path during use flexes the first valve in the downstream direction to allow the pressurized flow of water toward the filter during use;
a second valve inside the cartridge and located to extend across and selectively block the outlet flow path, the second valve being resiliently biased toward a first position blocking the outlet flow path, the second valve having a second position in which the pressurized flow of water along the outlet flow path during use flexes the second valve in the downstream direction to allow the pressurized flow of water past the filter and away from the second valve during use;

2. The water filter cartridge of claim 1, wherein the second valve is an umbrella valve; or
wherein at least one of the first and second valves
has a non-linear bending stiffness and is orientated so it requires greater pressurized fluid flow in the downstream direction for water to flow past the at least one valve and no pressurized fluid flow in the upstream direction for water to be blocked from flowing past the at least one valve.

3. The water filter cartridge of claim 1, wherein the first valve is an annular diaphragm valve having an inner periphery encircling an outlet nozzle; or
wherein the first valve is a diaphragm valve and the
second valve is an umbrella valve; or
wherein the cartridge has a tubular inlet nozzle and a
tubular outlet nozzle located inside the inlet nozzle with an annular space between the nozzles defining the water inlet.

4. The water filter cartridge of claim 3, wherein the first valve is a diaphragm valve having an inner portion connected to the outlet nozzle and an outer portion abutting the housing to form the first valve; preferably wherein the second valve is an umbrella valve having a stem and a top with the stem aligned with the outlet flow path and the top blocking the water from flowing out the outlet flow path when the cartridge is not in use, the stem being held by a support extending across the outlet flow path.

5. The water filter cartridge of claim 4, wherein the second valve is an umbrella valve
having a stem and a top with the stem aligned with the outlet flow path and the blocking the water from flowing out the outlet flow path when the cartridge is not in use, the stem being held by a support extending across the outlet flow path.

6. The water filter cartridge of claim 1, further comprising a second, filter located in the outlet flow path between the second filter and the outlet, the second filter configured to trap smaller particles than the first filter; or
wherein the first valve is a diaphragm valve having
an inner portion connected to the outlet nozzle and an outer periphery abutting the housing to form the first valve, the outlet nozzle having a shoulder on the downstream side of the first valve and located to abut the first valve during use to alter the flexibility of the first valve so the first valve is stiffer when flexed in the downstream direction when water flows through the inlet and toward the filter than when flexed in the upstream direction when water flows away from the filter and toward the inlet.

7. The water filter cartridge of claim 1, wherein the first valve has a non-linear bending stiffness and is oriented so that the first valve requires greater pressurized flow in downstream direction toward the filter to deform the first valve and requires less or no pressurized flow in the upstream direction to block flow past the first valve; preferably
wherein the non-linear bending stiffness of the first
valve is provided by supporting an inner portion of the first valve on a downstream side of the first valve against movement in the downstream direction during pressurized flow occurring during use; or wherein the second valve has a non-linear bending
stiffness and is oriented so that the second valve requires greater pressurized flow in the downstream direction to allow water to flow past the second valve and requires less or no pressurized flow in the upstream direction to block water flow past the second valve.

8. The water filter cartridge of claim 1, wherein the second valve has a non-linear bending stiffness and is oriented so that the second valve requires greater pressurized flow in the downstream direction to allow water to flow past the second valve and requires less or no pressurized flow in the upstream direction to block water flow past the second valve; or
wherein the second valve is an umbrella valve
having a stem mounted in a cup to selectively block flow out of a downstream end of a cylindrical main filter with the umbrella valve sealing against the cup to block flow and with the bottom of the cup having at least one opening through which water can pass during use of the cartridge.

9. A water filter cartridge having a housing with a water inlet and a water outlet with a flow path carrying water from the inlet, through a filter in the housing and to the outlet, the inlet and outlet having seals located and configured to form a water tight connection with a water source and to provide filtered water from the cartridge to an appliance during use of the cartridge, the filter cartridge comprising:
first and second concentric, tubular nozzles aligned along a longitudinal axis with the second nozzle smaller than the first nozzle and passing through at least part of the first nozzle to form a space therebetween defining a first portion of a flow path and with the second tubular nozzle defining a second portion of the flow path with a first filter located between and in fluid communication with the first and second flow paths;
a first diaphragm valve connected to the second nozzle and located and configured to releasably block the first portion of the flow path with the first valve resiliently urged into a first, closed position, the first valve having a second, open position allowing fluid flow past the first valve; and
a second umbrella valve located and configured to releasably block the second portion of the flow path with the second valve resiliently urged into a first, closed position, the second valve having a second, open position allowing fluid flow past the second valve;

10. The water filter cartridge of claim 9, wherein the first and second valves each have a non-linear stiffness; or
wherein the first valve is biased closed in a
downstream direction and the second valve is biased closed in an upstream direction.

11. The water filter cartridge of claim 9, wherein the first valve is an inlet valve having an outer portion of the valve abut the housing to block flow; or
wherein the first valve is an inlet valve having a
support on the downstream side of the diaphragm so the first valve is stiffer in the downstream direction than in the upstream direction.

12. The water filter cartridge of claim 9, wherein the first nozzle forms the inlet and the second nozzle forms the outlet, and wherein the main filter is a cylindrical filter having a central hole extending along the longitudinal axis and wherein the second valve is mounted in a cup nested inside that central hole at a downstream end of cylindrical filter, with the umbrella valve sealing against the cup to block flow, the cup having holes therethrough to allow water to flow through the cup when permitted by the second valve; or
wherein the first nozzle forms the inlet and the second nozzle forms the outlet, and further comprising a fines filter on the downstream side of the cup and interposed between the cup and the outlet nozzle; or wherein the filter cartridge
further comprises a second filter blocking one end of the cup within which the umbrella valve is located, with the umbrella valve having a curved top that flexes between open and closed positions within the cup to open and block flow through the cup and thus open or block flow through the outlet nozzle.

13. A water filter cartridge for use with an appliance and a source of water, the cartridge having a filter in a housing with a flow path having a first opening on the cartridge that is in fluid communication with a first surface of the filter and a second flow path in fluid communication with a second surface of the filter and a second opening on the cartridge, the first and second flow paths providing the only fluid ingress and egress to the filter cartridge the filter cartridge comprising:
a first annular valve on the first flow path with the first valve biased closed to block flow along the first flow path in either the upstream or downstream direction when the cartridge is removed from the appliance after use, the first valve configured to open when a downstream pressure differential across the first valve is less than the pressure provided by the source of water during use of the cartridge;
a second valve located on a portion of the second flow path passing through the first annular valve so the first valve encircles a portion of the second flow path, the second valve located between the second opening and filter with the second valve biased closed to block flow along the second flow path in either the upstream or downstream direction when the cartridge is removed from the appliance after use, the second valve configured to open when the pressure differential across the second valve is less than the pressure provided by the source of water during use of the cartridge.

14. The filter cartridge of Claim 13, wherein the first valve is a diaphragm valve and the second valve is an umbrella valve, preferably wherein the umbrella valve has a curved top with a stem held in a cup located in the flow path passing through the middle of a cylindrical filter, the cup located at one end of the filter; or
wherein the diaphragm valve has an outer portion that seats against the housing and the umbrella valve seats against a surface of an annular surface encircling the second flow path.

15. The filter cartridge of Claim 13, wherein the first opening is on an annular inlet nozzle and the second opening is on a tubular outlet nozzle.
